# EUROPEAN PATENT APPLICATION

(11) **EP 2 000 961 A1**
(43) Date of publication of application: **10.12.2008**
(21) Application number: 07109405.6
(22) Date of filing: 01.06.2007
(51) Int. Cl.: G06Q 10/00

(54) **Proximity-dependent events**

(71) Applicant: Research In Motion Limited, Waterloo, Ontario N2L 3W8 (CA)
(72) Inventor: Martin, Daryl Joseph, Paradise Newfoundland & Labrador A1L 2Y6 (CA); Hassan, Ahmed E., Waterloo Ontario N2J 4T3 (CA); O'Keefe, Christopher, St John's Newfoundland & Labrador A1B 4H3 (CA)
(74) Representative: Rickard, David John

(57) **Abstract**

A calendar application for use with a first portable electronic device includes time-dependent events having a start time and an end time and proximity-dependent events having a specified device ID that corresponds to a second portable electronic device. Both the time-dependent events and the proximity-dependent events are stored in the calendar application and the proximity-dependent event is convertible into a time-dependent event. A proximity reminder is generated when the second portable electronic device is in short range radio frequency communication range of the first portable electronic device.

## Description

The present disclosure relates generally to proximity-dependent events, in particular, proximity-dependent reminders for wireless devices.

Many electronic devices such as desktop computers or mobile stations including simple cellular telephones, smart telephones, wireless personal digital assistants (PDAs), and laptop computers with wireless 802.11 or Bluetooth^{™} capabilities, include calendar or date-book applications for scheduling and reviewing time-dependent events such as appointments and meetings in a graphical user interface. The information relating to time-dependent events such as time, place and duration is saved as a time-dependent event and is viewable in the graphical user interface in various layouts such as a day view, a week view or a month view. Such applications are useful for maintaining a list of time-dependent events for a user, and audible or visible alerts are commonly employed for notifying or reminding the user of any or all of the events.

With many portable electronic devices such as cellular telephones, smart telephones, and wireless PDAs, time-dependent events can be created and saved using the calendar application of the portable electronic device. Time-dependent events can also be created and saved on another electronic device such as a desktop or laptop computer, using a calendar service application on the desktop computer. These time-dependent events can be synchronized or transferred to the portable electronic device by wired or wireless connection. Thus, the time-dependent events are stored at both the desktop computer and at the portable electronic device such that the time-dependent events at the electronic device mirror those at the desktop computer. This permits convenient viewing of the events using the calendar application at either the device or the desktop computer.

Mobile devices having Bluetooth capabilities have introduced the possibility of having both time-dependent events and proximity-dependent events. It would be advantageous to display time-dependent events and proximity dependent events in a single calendar application on a portable electronic device.

### GENERAL

In one aspect there may be provided a calendar application for use with a first portable electronic device, the calendar application including:
time-dependent events having a start time and an end time, the time dependent events being stored in the calendar application;
proximity-dependent events stored in the calendar application, the proximity-dependent events including a specified device ID, the specified device ID corresponding to a second portable electronic device;
a proximity reminder generated when the second portable electronic device is in short range radio frequency communication range of the first portable electronic device; and
wherein the proximity-dependent event is convertible into a time-dependent event.

### BRIEF DESCRIPTION OF THE DRAWINGS

The embodiments will be better understood with reference to the following Figures in which like numerals denote like parts and in which:

Figure 1 is a schematic view of a first portable electronic device in short range radio frequency communication range with a second portable electronic device;

Figure 2 is a schematic diagram of a wireless communication system of the first and second portable electronic devices of Figure 1;

Figure 3 is a block diagram of components of portable electronic devices according to an embodiment;

Figures 4, 5 and 6 are screen shots relating to time-dependent events in a calendar application of the portable electronic devices;

Figures 7 and 8 are screen shots relating to proximity-dependent events in the calendar application according to an embodiment;

Figure 9 is a flowchart showing a method of converting a proximity-dependent event into a time-dependent event according to an embodiment; and

Figure 10 is a flowchart showing device-side operation of the method of Figure 9.

### DESCRIPTION OF PREFERRED EMBODIMENTS

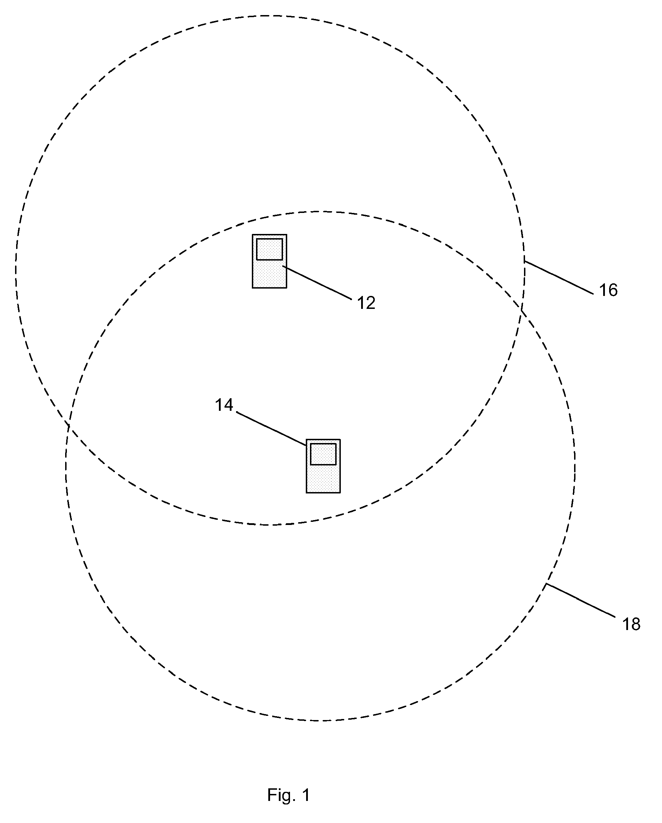

Referring to Figure 1, a first portable electronic device 12 and a second portable electronic device 14 are generally shown. The portable electronic devices 12, 14 shown are exemplary devices that are based on the computing environment and functionality of a hand-held wireless communication device. It will be understood, however, that the portable electronic devices 12, 14 are not limited to a hand-held wireless communication device. Other portable electronic devices are possible, such as cellular telephones, smart telephones, and laptop computers, for example.

The portable electronic devices 12, 14 include Bluetooth^{™} technology for short range radio frequency (RF) voice and data communications. Coverage areas 16 and 18 for short range RF communications of first portable electronic device 12 and second portable electronic device 14, respectively, are indicated as circles centered on the devices 12, 14. Overlap area 20 indicates that the first portable electronic device 12 and the second portable electronic device 14 may communicate with one another. In addition, either device 12, 14 may communicate with any other Bluetooth^{™}-enabled device that is located within its coverage area 16, 18.

The portable electronic devices 12, 14 are not limited to using Bluetooth^{™} technology. Other short-range radio frequency (RF) technologies such as induction wireless, infrared wireless, or ultra wideband, for example, may alternatively be used. If infrared wireless is used, line-of-sight communication is required between the portable electronic devices 12, 14.

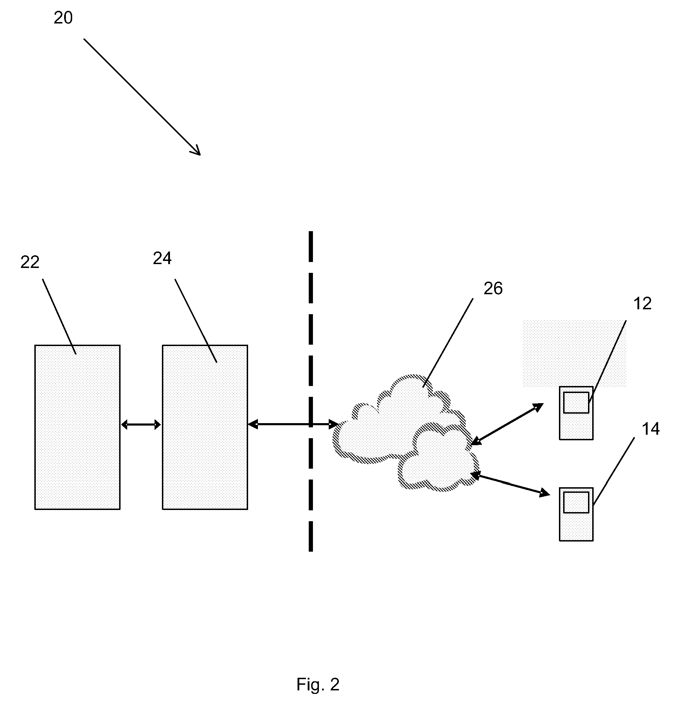

Referring to communication system 10 of Figure 2, the portable electronic devices 12 and 14 are further operable to effect communications over a radio communications channel and communicate with a base station (not shown) while located within a coverage area that is defined by the base station. The base station is part of a wireless network that is in communication with the Internet 20. Data is delivered to the portable electronic devices 12, 14 via wireless transmission from the base station. Similarly, data is sent from the portable electronic devices 12, 14 via wireless transmission to the base station. A server 22 handles wireless client requests from the portable electronic devices 12, 14 and a firewall, or proxy server, 24, is provided between the server 22 and the Internet 26.

It will be appreciated that the portable electronic devices 12, 14 are movable within the coverage area of the base station and can be moved to coverage areas defined by other base stations. Further, as will be understood by one of ordinary skill in the art, wireless networks include GSM/GPRS, CDPD, TDMA, iDEN Mobitex, DataTAC networks, EDGE or UMTS and broadband networks including variants of 802.11.

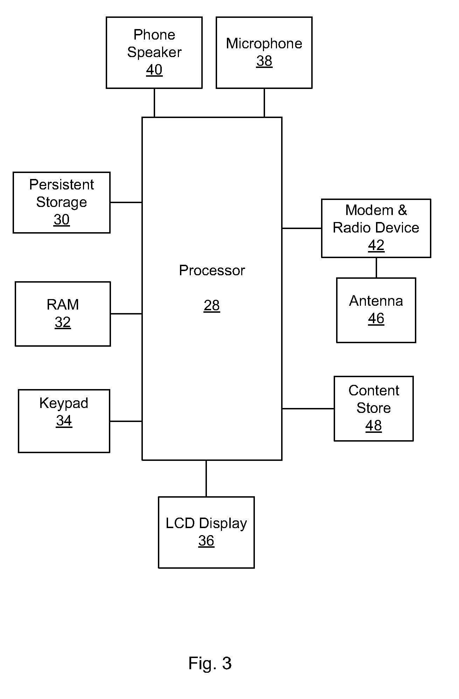

Referring to Figure 3, a block diagram of certain components within the first portable electronic device 12 is shown. It will be appreciated that the second portable electronic device 14 includes similar components and therefore will not be described separately.

The first portable electronic device 12 is based on a microcomputer including a processor 28 connected to a persistent storage 30 and a random access memory unit (RAM) 32. In one embodiment, the persistent storage 30 is flash memory that contains a plurality of applications executable by the processor 28 that enables each portable electronic device 12 to perform certain functions including, for example, PIN message functions, SMS message functions and cellular telephone functions. The processor 28 receives input from various input devices including a keypad 34. The processor 28 outputs to various output devices including an LCD display 36. A microphone 38 and phone speaker 40 are connected to the processor 28 for cellular telephone functions. The processor 28 is also connected to a modem and radio device 42. The modem and radio device 42 is used to connect to wireless networks and transmit and receive voice and data communications through an antenna 44. A content store 46, which is generally a file storage system for the portable electronic device 12, is also provided.

The portable electronic devices 12, 14 include a Calendar application that is used for displaying and storing calendared events such as appointments, lectures, exams, movies, meetings, performances, dinners, ceremonies, etc., when executed by the processor 28. Each calendared event includes a variety of information including a date and time of the event.

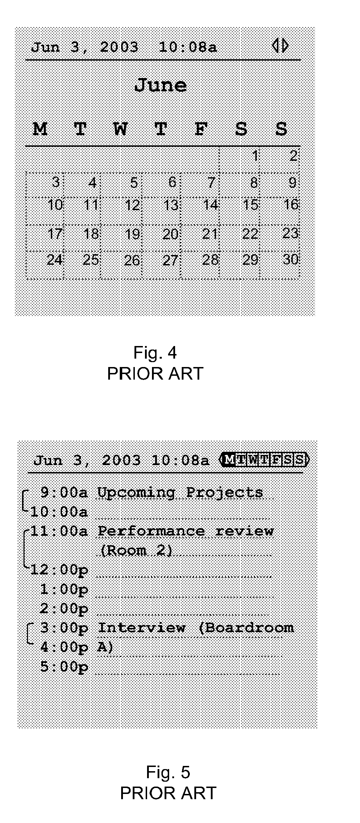

Selection of the Calendar application on the LCD display 36 using a selection device such as a trackwheel (not shown), for example, causes the processor 28 to execute the Calendar application, providing a calendar user interface and displaying information relating to calendared events including meetings saved using the calendar application. This information can be selectively manipulated by and displayed to the user in various formats including monthly, weekly or daily schedules. Figures 4 and 5 show exemplary screen shots of monthly and weekly schedules, respectively. In the example of Figure 5, there are three events including: an "Upcoming Projects" event from 9:00 a.m. until 10:00 a.m., a "Performance Review" from 11:00 a.m. until 12:00 p.m. and an "Interview" from 3:00 p.m. until 4:00 p.m.

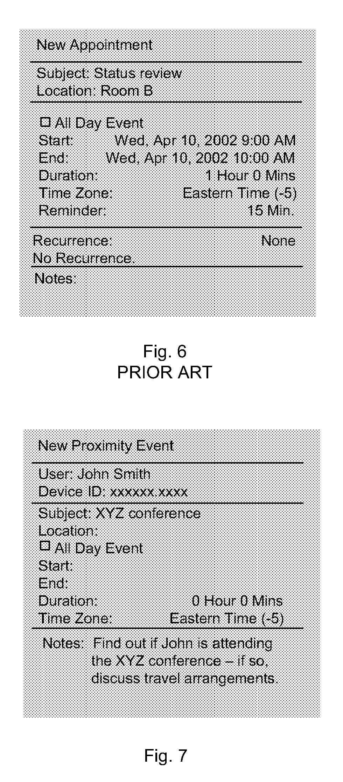

Time-dependent appointments, such as those shown in Figure 5 are created manually by the user or automatically in response to a meeting request from another party. A new appointment screen for composition of a new event for addition to the calendar display is shown in Figure 6. As shown, the new appointment screen includes the event subject, the location, an indication as to whether or not the meeting is an all-day event, the start time, the end time, the duration, the time zone, a reminder setting, an indication of whether or not this is a recurring event and a field for entering notes relating to the event. For the exemplary meeting shown in Figure 6, the subject is "Status Review" and the location is "Room B". The start time of the meeting is Wednesday, April 10, 2002 at 9:00 a.m. and the end time is Wednesday, April 10, 2006 at 10:00 a.m. Thus, the meeting duration is 1 hour. A reminder is set to remind the user of the meeting 15 minutes prior to the meeting.

Meeting requests appear as messages in a messaging application of the portable electronic device 12, 14. New appointments based on meeting requests are created by selecting an 'accept' option associated with the meeting request message. Once the meeting has been accepted, the device calendar and the desktop calendar are updated over the wireless network and a response message, which is sent to the meeting organizer, replaces the original meeting request message. Meeting details may be viewed by opening the response message or by opening the newly created calendar event in the calendar application.

According to an embodiment, a calendar application is provided for use with both time-dependent events and proximity-dependent events. Unlike time-dependent events, reminders for proximity-dependent events are generated based on proximity to another user. Such reminders will be generated when the other user is within short RF communication range.

Referring to Figure 7, a screen shot of a new proximity-dependent event for addition to the calendar of the first portable electronic device 12 is shown. The proximity event includes a person field, a device ID field, fields relating to meeting details and a notes field. The device ID is the unique signature that is associated with the device.

In this example, the first portable electronic device 12 includes a proximity-dependent event for which the specified device ID corresponds to the second portable electronic device 14. When the second portable electronic device 14 is in a normal operating condition, its unique signature is broadcast continuously. The broadcast signal is received by the antenna 46 of the first portable electronic device 12 when it is broadcast range of the second portable electronic device 14. Upon receipt of the broadcast signal, the first portable electronic device 12 notifies the user with an auditory or vibratory reminder.

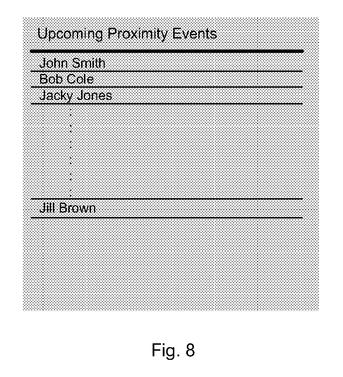

A screen shot showing a list of proximity dependent events that are stored in the calendar application is provided in Figure 8. The list of proximity-dependent events is a view similar other views of the calendar application including month, week and day calendar formats. The list provides the user of the first portable electronic device 12 with a summary of all of the reminders that are waiting to be triggered. The user may view a pending proximity-dependent event by selecting the line and then selecting an open option.

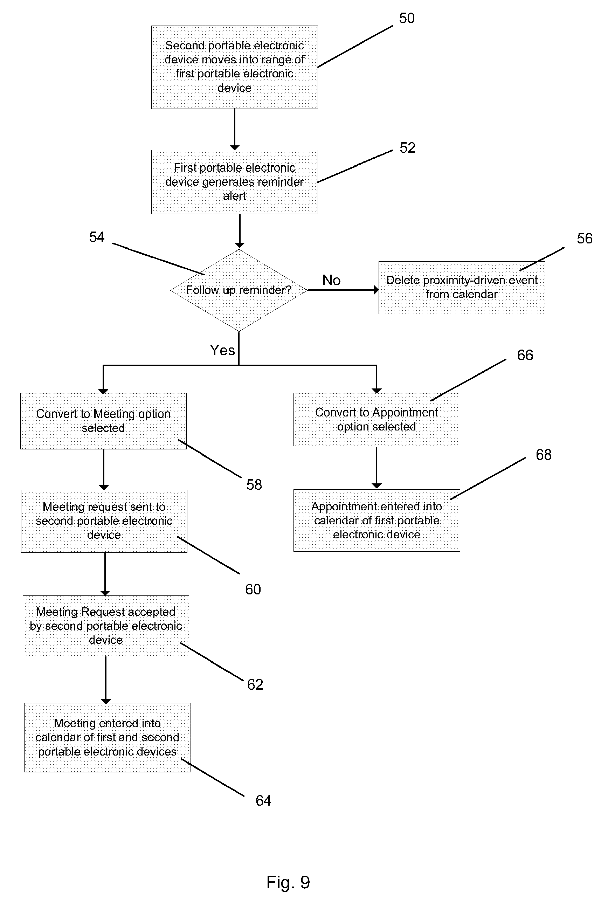

A method for generating time dependent events based on proximity-dependent events within the calendar application will now be described with reference to Figure 9. When the first portable electronic device 12 and the second portable device 14, whose device ID corresponds to the device ID of the proximity-dependent event of Figure 7, move into range of one another, the user of the first device 12 is alerted by the proximity-dependent event reminder, as indicated at steps 50 and 52. The user of the first portable electronic device 12 may then meet with the user of the specified device and discuss the subject of the reminder, which is the "XYZ conference" in the example of Figure 7.

Once the user of the first portable electronic device 12 has met with the specified device user, the user determines whether or not the proximity-dependent event will be followed up with a meeting or an appointment, as indicated at step 54. In order to create the follow-up event, the user of the first portable electronic device 12 selects a meeting option or an appointment option from a menu of the proximity-dependent event within the calendar application. Alternatively, if the user of the first portable electronic device 12 has concluded discussions regarding the subject with the user of the second portable electronic device, the user selects a "no follow up" option and the proximity-dependent event is deleted from the calendar, as indicated at step 56. The "no follow up" option would be selected, for example, if John Smith was not attending the XYZ conference.

If the user selects the meeting option, the proximity-dependent event is converted into a meeting, as indicated at step 58. The meeting option would be selected if the users of the devices 12, 14 had decided to meet at a later time/date to discuss travel arrangements. When this option is selected, the calendar application converts the proximity-dependent event of Figure 7 into a meeting request. Where possible, the meeting request is populated with information from the proximity-dependent event. For example, the user identified in the proximity-dependent event would be identified as a meeting attendee and the subject and the notes would be copied from the proximity-dependent event. The user of the first portable electronic device 12 would have to provide some information at the time the proximity-dependent event is being converted in order to populate fields that are not provided in the proximity-dependent event. For example, the time/date and location of the meeting. Also, if other attendees were to be invited, they would be added to the meeting request.

The meeting request is then sent to the second portable electronic device 14, as indicated at step 60. It will be appreciated that once the proximity-dependent event has been converted into a meeting request, the meeting request behaves like any other meeting request. Thus, once the meeting request has been accepted by the user of the second portable electronic device 14, as indicated at step 62, an appointment is automatically entered into the calendar of the second portable electronic device 14, as indicated at step 64. Sending and accepting meeting requests using calendar applications is well known in the art and therefore will not be discussed further here.

If the user selects the appointment option, the proximity-dependent event is converted into an appointment, as indicated at step 66. The appointment option would be selected if, for example, the user of the first portable electronic device 12 requires a reminder for a later time/date to book a seat on the confirmed flight of the user of the second portable electronic device 14. In this case there is no need to meet with the user of the second portable electronic device 14 again; however, the proximity-dependent event should be followed up with an appointment.

Similar to meeting requests, the appointment is populated with information from the proximity-dependent event where possible. Any additional information, such as the time of the appointment, is entered into the appointment by the user of the first portable electronic device 12 at the time of conversion. Once the appointment is populated with all of the desired information, the appointment is saved in the calendar application, as indicated at step 68.

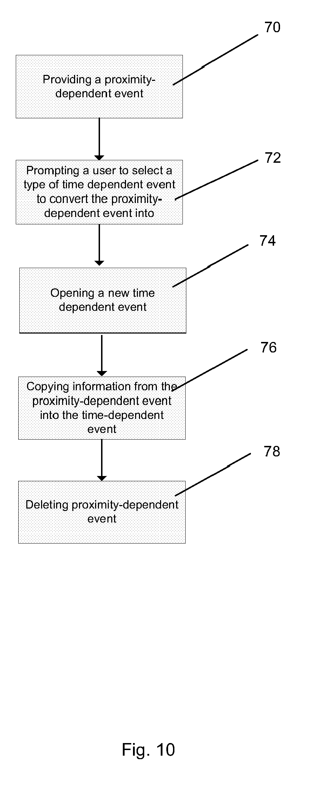

Referring to Figure 10, device operation of the method for generating time dependent events based on proximity-dependent events within the calendar application will now be described. At step, 70 a proximity-dependent event is provided in the calendar application of the first portable electronic device 12. At step 72, the user is prompted to select a type of time-dependent event that the proximity-dependent event is to be converted into. As previously described, the user may select meeting or appointment. At step 74, a new time-dependent event of the type selected by the user is opened. Information from the proximity-dependent event is then copied into the time-dependent event, as indicated at step 76. Once the information has been successfully copied, the proximity-dependent event is deleted, as indicated at step 78.

In another embodiment, when the proximity-dependent event alerts the user of the proximity of the specified device ID, the user is able to view the calendar of the user of the specified device. By checking the calendar, the user would be able to determine if the user of the specified device is busy and, if so, for how long. As such, the user would not interrupt the specified user unnecessarily. It will be appreciated that in order for this embodiment to be employed, the user of the specified device would have to enable the public calendar on his/her device.

Device ID's for various users are stored in an address book application of the portable electronic device 12. The Device IDs may be manually entered into an appropriate field of an address book record or, alternatively, the portable electronic device 12 can scan for Bluetooth^{™}-enabled devices in the vicinity and store the device IDs that correspond to contacts in their address book.

In another embodiment, the proximity of devices 12, 14 is determined by using Global Positioning System information that is collected and monitored by a central server. In this embodiment, the central server tracks the location of various portable electronic devices and stores proximity driven reminders that are generated by each portable electronic device. When the first portable electronic device 12 is within a set distance of the second portable electronic device 14, the central server searches for reminders that have been previously saved in relation to either of the portable electronic devices 12, 14. If a reminder that was generated by the first device 12 relating to the second device 14 and was previously saved at the central server, the reminder will be forwarded to the first device 12 when the distance between the devices 12, 14 is less than or equal to the set distance. It will be appreciated that in this embodiment, the set distance is unlimited. As long as the devices 12, 14 are in contact with the central server, the central server is able to determine the distance between the devices 12, 14 and forward reminders thereto.

In yet another embodiment, proximity-dependent reminders are not integrated into a calendar application. As such, the proximity-dependent reminders may be generated on a device that does not include a calendar application or alternatively, the proximity-dependent reminders may operate independently of a device calendar application.

Although portable electronic devices 12 and 14 are described as being similar, it will be appreciated by a person skilled in the art that the devices could be dissimilar. Any device having short range RF communication or GPS capability would be suitable such as a Palm Treo^{™} or Nokia^{™} cell phone, for example.
A specific embodiment has been shown and described herein. However, modifications and variations may occur to those skilled in the art. All such modifications and variations are believed to be within the sphere and scope of the present embodiment.

## Claims

1. A method for generating time-dependent events based on proximity-dependent events in a calendar application of a portable electronic device, said method comprising:
providing a proximity-dependent event generated using said calendar application, said proximity-dependent event having a user field and a subject field;
prompting a user to select a type of time-dependent event that said proximity-dependent event is to be converted into;
opening a new time-dependent event having said type; and
copying said name field and said subject field from said proximity-dependent event into corresponding fields in said new time-dependent event;
wherein said proximity-dependent event is deleted following population of said corresponding fields in said new time-dependent event.

2. A method as claimed in claim 1, wherein said type of time-dependent event is a meeting request or an appointment.

3. A method as claimed in claim 1, wherein said type of time-dependent event is an appointment.

4. A calendar application for use with a first portable electronic device, said calendar application comprising:
time-dependent events having a start time and an end time, said time dependent events being stored in said calendar application;
proximity-dependent events stored in said calendar application, said proximity-dependent events having a specified device identity 'ID', said specified device ID corresponding to a second portable electronic device;
a proximity reminder generated when said second portable electronic device is in short range radio frequency communication range of said first portable electronic device; and
wherein said proximity-dependent event is convertible into a time-dependent event.

5. A calendar application as claimed in claim 4, wherein said time-dependent event is a meeting request.

6. A calendar application as claimed in claim 4, wherein said time-dependent event is an appointment.

7. A portable electronic device comprising:
a processor; and
a calendar application operable by said processor, said calendar application being capable of generating and storing time-dependent events and proximity-dependent events;
wherein said time-dependent events are convertible into proximity-dependent events.

8. A computer readable medium storing computer readable instructions executable by a processor of a computing device to cause said device to implement the steps of the method of any one of claims 1 to 3.

## Amended claims

### Amended claims in accordance with Rule 137(2) EPC.

**1.** A method for generating proximity-dependent events in a calendar application of a first portable electronic device (12), said method comprising:
detecting at said first portable electronic device (12) that a second portable electronic device (14) is within range (16) of said first portable electronic device (12);
generating a reminder alert on said first portable electronic device (12); said reminder alert corresponding to a proximity-dependent event generated using said calendar application, said proximity-dependent event having a user field and a subject field; said user field identifying said second portable electronic device (14); said reminder alert indicating that said second portable electronic device (14) is within said range (16).

**2.** A method as claimed in claim 1 further comprising:
opening a new time-dependent event; and
copying said user field and said subject field from said proximity-dependent event into corresponding fields in said new time-dependent event;
wherein said proximity-dependent event is deleted following population of said corresponding fields in said new time-dependent event.

**3.** A method as claimed in claim 2, wherein said time-dependent event is a meeting request or an appointment.

**4.** A method as claimed in claim 2, wherein said time-dependent event is a meeting and further comprising the steps of:
sending a meeting request to said second portable electronic device (14);
receiving an acceptance of said meeting at said first portable electronic device (12) from said second portable electronic device (14).

**5.** A first portable electronic device (12) comprising:
a radio configured to detect when a second portable electronic device (14) is within communication range (16) of said first portable electronic device (12);
a microcomputer connected to said radio configured to execute a calendar application; said microcomputer configured to maintain at least one time-dependent event having a start time and an end time; said time dependent event being accessible by said calendar application; said microcomputer further configured to maintain at least one proximity-dependent event accessible by said calendar application; said proximity-dependent event having a specified device identity 'ID'; said specified device ID corresponding to said second portable electronic device (14);
said microcomputer further configured to generate a proximity reminder alert indicating that said second portable electronic device (14) is within said communication range (16) when said second portable electronic device (14) is detected by said radio.

**6.** A first portable electronic device (12) as claimed in claim 5, wherein said microcomputer is further configured to convert said proximity-dependent event into a time-dependent event.

**7.** A first portable electronic device (12) as claimed in claim 6, wherein said time-dependent event is a meeting request.

**8.** A first portable electronic device (12) as claimed in claim 6, wherein said time-dependent event is an appointment.

**9.** A computer readable medium storing computer readable instructions executable by a processor (28) of a computing device (12) to cause said device (12) to implement the steps of the method of any one of claims 1 to 4.
